# EUROPÄISCHE PATENTSCHRIFT

(11) **EP 0 652 710 B1**
(45) Veröffentlichungstag und Bekanntmachung des Hinweises auf die Patenterteilung: **15.01.1997**
(21) Anmeldenummer: 93917680.6
(22) Anmeldetag: 28.07.1993
(51) Int. Cl.: A21C 3/08

(54) **VERFAHREN ZUM VERFORMEN EINES GERADEN TEIGSTRANGES ZU EINER BREZEL**
PROCESS FOR SHAPING A STRAIGHT ROPE OF DOUGH INTO A PRETZEL
PROCEDE PERMETTANT DE MODELER UN JONC DE PATE DROIT POUR EN FAIRE UN BRETZEL

(30) Priorität: 29.07.1992 DE 4225066
(43) Veröffentlichungstag der Anmeldung: 17.05.1995
(73) Patentinhaber: Schütz, Otto, D-81369 München (DE)
(72) Erfinder: Schütz, Otto, D-81369 München (DE)
(74) Vertreter: Alber, Norbert
(86) Internationale Anmeldenummer: EP9302012
(87) Internationale Veröffentlichungsnummer: WO9403069

(56) Entgegenhaltungen:
- CH-A- 470 839
- DE-A- 3 208 105
- DE-A- 4 032 466
- DE-A- 4 100 158
- DE-C- 4 105 254
- US-A- 1 397 233

## Beschreibung

Die Erfindung betrifft ein Verfahren zum Erstellen der verschlungenen Form einer Brezel aus einem vorher geraden, gestreckten Teigstrang mit Hilfe einer Maschine, um die Herstellungskosten der Brezeln zu senken.

Selbstverständlich können Brezeln mittels einer zweiteiligen Form in die gewünschte Brezelform gepreßt werden.

Die - vor allem in Süddeutschland beliebten - frischen Brezeln bestehen jedoch aus einem Teig, der nicht spritzfähig ist, sondern der zu einem Teigstrang gerollt werden muß, aus welchem dann die Brezeln geschlungen werden müssen. Nur durch den in seiner Querschnittsdarstellsung gerollten Teigstrang wird die angestrebte innere Konsistenz dieses Backgutes erreicht.

Somit muß auch eine maschinelle Erstellung der Brezeln von einem solchen gerollten, zunächst geraden Teigstrang ausgehen.

Dabei ist es beispielsweise aus der DE-PS 3 841 395 bekannt, mittels einer entsprechenden Vorrichtung, die mit Saugnäpfen arbeitet, die Enden eines solchen Teigstranges zu ergreifen, hochzuziehen, zu verschlingen und auf dem Mittelbereich des Teigstranges in entsprechender Position abzulegen und festzudrücken, also den Handvorgang des Brezelschlingens möglichst naturgetreu nachzubilden.

Dieses Verfahren ist jedoch deshalb nachteilig, weil gerade die dünneren Enden des Teigstranges besonders schwer zu handhaben sind und darüber hinaus ein Verfahren, welches mit dem Ergreifen der Enden des Teigstranges arbeitet, allein schon dadurch erschwert wird, daß aufgrund des Ausrollens des Teiges zu einem Teigstrang dieser Teigstrang eine relativ stark differiernde Länge aufweisen kann, so daß die Greifpositionen nur nach grundsätzlich vorhergehender Vermessung des Teigstranges möglich ist.

Zusätzlich kann ein solches Verfahren nicht auf dem laufenden Transportband für die Teigstränge durchgeführt werden, sondern nur im Rahmen einer separaten Arbeitsstation.

Weiterhin ist es aus der DE-OS 3 900 950 bekannt, mittels eines Aufnahmeformteiles, welches die Form einer Schaufel hat, das Mittelteil des Teigstranges aufzunehmen und bei etwa waagerecht gehaltener, etwas angehobener Schaufel diese Schaufel um 360° zur Erzielung des mittleren Knotens zu drehen und anschließend den Teigstrang wieder abzulegen.

Der Nachteil dieses Verfahrens besteht darin, daß aufgrund der Schlingbewegung, bei der der Mittelteil des Teigstranges sich in einer waagerechten Ebene befindet, asymmetrische Brezeln entstehen, da das eine Teigstrangende stärker gezogen wird als das andere, welches im Extremfall sogar auf Druck beansprucht werden kann. Dadurch entstehen nicht nur unterschiedlich dicke, sondern auch unterschiedlich lange Teigstrang-Enden während des Schlingvorganges, so daß diese Brezeln nicht nur asymmetrisch in ihrer Gestaltung sind, sondern auch das gestauchte Teigstrangende u.U. nicht mehr nach dem Ablegen vom Mittelbereich überdeckt wird, so daß überhaupt keine Brezel zustandekommt.

Ein weiterer Nachteil dieses Verfahrens besteht darin, daß die als Aufnahmeformteil ausgebildete Schaufel quer zur Längserstreckung des urprünglichen Teigstranges in der waagerechten Ebene angenähert werden muß und damit bei der Durchführung der Schlingbewegung auf dem Transportband der Teigstränge diese quer zur Transportrichtung auf dem Band liegen müssen, um eine zuverlässige Aufnahme zu erzielen.

Ausgehend vom letztgenannten Stand der Technik ist es die Aufgabe der vorstehenden Erfindung, ein Verfahren zum maschinellen Schlingen von Brezeln zu schaffen, welches einfach und zuverlässig mit möglichst gleichbleibendem Ergebnis funktioniert, möglichst geringe mechanische Anforderungen an die Handhabbarkeit des ungebackenen Teigstranges stellt und mit einer möglichst einfachen Vorrichtung durchzuführen ist.

Diese Aufgabe ist durch die kennzeichnenden Merkmale der Ansprüche 1, 11 und 12 gelöst. Vorteilhafte Ausführungsformen ergeben sich aus den jeweiligen Unteransprüchen.

Dadurch, daß die Schlingbewegung erst vollzogen wird, wenn der Mittelteil des Teigstranges sich in einer im wesentlichen senkrechten Ebene befindet und über den dann höchsten Punkt des entsprechenden Aufnahmeformteiles verläuft, wird beim Schlingen eine symmetrische Brezel erzielt, was zusätzlich durch das Niederhalten der Enden des Teigstranges gefördert wird.

Dabei kann der Teigstrang dadurch vom Aufnahmeformteil aufgenommen werden, daß er - im in die senkrechte abgekippten Zustand - von oben und im wesentlichen senkrecht gegen das Mittelteil des Teigstranges bewegt wird, und dieses Mittelteil des Teigstranges durch entsprechende Greiforgane gegen ein entgegengerichtetes Greiforgan oder eine fest am Aufnahmeformteil einseitig angeordnete Unterstützungskante gedrückt und dann das Aufnahmeformteil um eine waagerechte Achse hochgeschwenkt wird, bis wiederum eine senkrechte Lage des Aufnahmeformteiles erreicht ist.

Ebenso besteht jedoch auch die Möglichkeit, das Aufnahmeformteil in eine waagrechte oder schräg nach unten weisende Lage zu bringen und waagerecht auf das Mittelteil des Teigstranges zuzubewegen und diesen zu ergreifen. Auch in diesem Fall sind gegeneinander gerichtete und beidseits am Aufnahmeformteil angeordnete Greiforgane zur Durchführung denkbar oder auch eine entlang der in dieser Stellung unteren Umfangskante des Aufnahmeformteils ausgebildete vorspringende Unterstützungskante.

Um jedoch sicherzustellen, daß beim späteren Ablegen und Andrücken der geschlungenen Brezel und Festdrücken der gewünschten Verbindungspunkte des Teigstranges sich nicht die Unterstützungskante dann an der Unterseite des dann in etwa waagerecht liegenden Aufnahmeformteiles befindet, ist diese an der späteren Oberseite des Aufnahmeformteiles anzuordnen.

Dies bedeutet, daß bei waagerechter Annäherung des Aufnahmeformteiles an den Teigstrang, bei der sich diese Unterstützungskante auf der Unterseite befinden muß, das Aufnahmeformteil anschließend nach hinten unten weggeschwenkt werden muß, über den tiefsten Punkt in der senkrechten Stellung des Aufnahmeformteiles hinweg bis das Aufnahmeformteil wiederum eine um 190° weitergedrehte, wiederum senkrechte Position einnimmt.

Dadurch ist eine Schwenkbewegung um insgesamt fast 270° notwendig, wenn zum Aufnehmen des Teigstranges eine waagerechte Annäherung des Aufnahmeteiles erfolgen soll.

Zusätzlich weist das Aufnahmeformteil über wenigstens 180° eine Umfangsfläche auf, die der späteren Innenkontur des Mittelteiles der Brezel entspricht, so daß im hochgekippten Zustand des Aufnahmeformteiles die sich an den Mittelbereich des Teigstranges anschließenden Seitenbereiche von dieser Umfangsfläche aus senkrecht herabhängen, während die Enden des Teigstranges auf dem Untergrund aufliegen und sich noch in den Niederhaltern befinden, die für den Fall einer nicht ausreichenden Haftreibung zwischen den Teigstrangenden und dem Untergrund vorgesehen sind.

Weiterhin wird nach dem Schlingen des Teigstranges das sich um das Aufnahmeformteil herum angeordnete Teil des Teigstranges unter Durchführung einer Bewegung des Aufnahmeformteiles quer zur Längserstreckung des ursprünglichen Teigstranges vollzogen.

Zu diesem Zweck wird nach oder während des Abkippens des Aufnahmeformteils in eine etwa waagerechte Lage oberhalb des geschlungenen Knotens das Aufnahmeformteil mit seinem hinteren Bereich nach hinten bewegt, so daß die Seiten der geschlungenen Brezel über den Enden der Teigstränge an der gewünschten Stelle zu liegen kommen.

In diesem Stadium ist das Aufnahmeformteil noch leicht schräg angeordnet, wobei der hintere Bereich des Aufnahmeformteiles den Untergrund annähernd erreicht, der Vorderbereich jedoch höher liegt. Durch eine anschließende Querbewegung in die Gegenrichtung löst sich - ggfs. unterstützt durch aktiv wirkende Elemente - der um den hinteren Bereich des Aufnahmeformteiles herumliegende Teil des Teigstranges und wird auf dem Untergrund abgelegt. Durch anschließende erneute Umkehrung der Querbewegung des Aufnahmeformteiles, also diesmal wiederum vom Mittelteil des Teigstranges weg, und möglichst unterstützt durch ein gleichzeitiges Kippen des Aufnahmeformteiles, so daß dessen Vorderbereich den niedrigsten Punkt und dessen Hinterbereich einen höherliegenden Punkt einnimmt, wird auch das Mittelteil des Teigstranges abgelegt.

Das leere Aufnahmeteil wird dann wiederum in Querrichtung auf den Mittelbereich des ursprünglichen Teigstranges zubewegt, so daß sich das Aufnahmeformteil sowohl über den Kreuzungspunkten der Enden des Teilstranges als auch über dem mittleren Knoten befindet. Durch Absenken des etwa waagerecht gehaltenen Aufnahmeformteiles wirken dann dessen außen liegende Bereiche die Kreuzungspunkte der Enden des Teigstranges mit den darüberliegenden Bereichen des Teigstranges zusammen, wozu ggfs. am Aufnahmeformteil nach außen ausfahrbare Preßflächen angeordnet sind.

Ebenso kann im Zentrum des Aufnahmeformteiles eine zentrale Preßfläche zum Andrücken des mittleren Knotens der Brezel vorgesehen sein.

Um ein möglichst problemloses Aufnehmen des Mittelbereiches des Teigstranges auf das Aufnahmeformteil zu gewährleisten, wird das Aufnahmeformteil vorzugsweise auch während des anfänglichen Hochkippens zusätzlich in Querrichtung so bewegt, daß sich der Teigstrang selbst nicht in Querrichtung bewegen muß, sondern das aufgenommene Mittelteil des Teigstranges sich lediglich in einer vertikalen Ebene nach oben bewegt.

Eine andere Möglichkeit zum problemlosen Aufnehmen des Mittelteiles des Teigstranges durch das Aufnahmeformteil besteht darin, daß das Aufnahmeformteil während des Aufnehmens eine weniger starke Krümmung seiner Außenkontur besitzt und im Extremfall eine vollständig gestreckte Form während des Aufnahmevorganges einnimmt.

Dann kann über einen beliebig großen Mittelbereich des Teigstranges eine Annäherung durch das dann zumindest in der Mitte gestreckte Aufnahmeformteil erzielt und der Teigstrang festgehalten werden.

Erst beim Hochkippen des Teigstranges, oder auch erst danach, vor der Durchführung der Schlingbewegung, wird dann das Aufnahmeformteil zu der endgültigen Kontur zusammengebogen, die der späteren Innenkontur der Brezel entspricht.

Eine solche Schlingmaschine befindet sich vorzugsweise über dem Transpöortband, auf dem die gestreckten, rohen Teigstränge in Richtung ihrer Längserstreckung herantransportiert werden. Befindet sich ein solcher Teigstrang im Arbeitsbereich der Schlingmaschine, wird das Band jeweils angehalten und die Brezel geschlungen und auf dem gleichen Transportband abgelegt. Dann wird mittels Taktschaltung der nächste Teigstrang herantransportiert.

Diese Möglichkeit, die Teigstränge auf einem Transportband in Richtung ihrer Längserstreckung heranzutransportieren, erleichtert die Zuführung der gerollten Teigstränge auf das Transportband, da die Teigstränge auf diese Art und Weise lediglich über eine schiefe Ebene auf das Transportband herabgerollt werden müssen.

Zusätzlich kann nach der Schlingmaschine eine Wendevorrichtung vorgesehen werden, um vor dem Fertigbearbeiten der Brezeln, also Abtauchen in Lauge und Besalzen, die Brezeln zu wenden, da die bisherige Oberseite aufgrund des Festdrückens der Teigverbindungen optisch weniger schön ist und zur Unterseite umfunktioniert werden sollte.

Bei einer derartigen Brezelschlingmaschine ist das Aufnahmeformteil um eine oberhalb des Teigstranges angeordnete, waagerechte und parallel zum Teigstrang liegende Schwenkachse um wenisgens 180°, vorzugsweise 270° verschwenkbar, wobei beide senkrechte Positionen des Aufnahmeformteiles, also mit dessen symmetrischer, mittlerer Rundung oben oder unten, anfahrbar sein müssen.

Die Höhelage dieser Schwenkachse muß dabei variabel sein, um das Aufnahmeformteil sowohl in Kontakt mit dem Teigstrang bringen zu können als auch zur Durchführung der Schlingbewegung das Aufnahmeformteil ausreichend weit über den Untergrund und damit das ursprüngliche Niveau des Teigstranges anheben zu können.

Zu diesem Zweck ist diese waagerechte Schwenkachse in einem Trägerkopf für das Aufnahmeformteil untergebracht. Dieser Trägerkopf ist mittels entsprechender Zwischenelemente gegenüber einem ortsfesten Grundgestell sowohl in der Höhe variabel, als auch um eine senkrechte Achse schwenkbar und um ein in Querrichtung zum Teigstrang verfahrbar.

Dies kann beispielsweise dadurch gelöst werden, daß der Trägerkopf um eine im wesentlichen senkrecht verlaufende Achse bezüglich einer darüber angeordneten Kopfbasis gelagert ist und diese Kopfbasis sowohl in Querrichtung des Teigstranges als auch in der Höhe bezüglich eines fest angeordneten Maschinen-Grundgestells änderbar ist.

Die Anbindung der Kopfbasis am Grundgestell kann vorzugsweise über einen Schwenkhebel erfolgen, der einerseits am Grundgestell und andererseits an der Kopfbasis schwenkbar befestigt ist und im wesentlichen waagerecht verläuft, jedoch um die Lagerstelle im Grundgestell gekippt werden kann.

Dadurch ist die Kopfbasis nicht nur in der Höhe verstellbar, sondern auch in ihrem in Querrichtung gegenüber dem Teigstrang einzunehmenden Position, in dem die Kopfbasis und damit auch die senkrechte Schwenkachse zwischen Kopfbasis und Trägerkopf um die Lagerstelle im Schwenkhebel verschwenkt und damit aus der senkrechten ausgelenkt werden kann.

Auf diese Art und Weise sind alle für das Verfahren notwendigen Bewegungsabläufe und anzufahrenden Positionen realisierbar.

Das Aufnahmeformteil selbst muß dabei entweder um 180° oder um 270° um seine waagerechte Schwenkachse bewegbar sein, je nachdem, ob zum Aufnehmen des Teigstranges das Aufnahmeformteil mehr in der Waagerechten oder mehr in der Senkrechten an den Teigstrang angenähert werden soll. Vorzugsweise ist die gesamte Vorrichtung oberhalb des Transportbandes für die Teigstränge angeordnet, so daß im Bereich der Ebene der Teigstränge keinerlei räumliche Behinderung für andere Aggregate eintritt.

Die Schlingmaschine umfaßt auch bewegliche Niederhalter für den in der Bearbeitungsposition befindlichen Teigstrang, mit dem die Enden des Teigstranges in einer definierten Position gehalten und am vorzeitigen Abheben vom Untergrund gehindert werden. Diese Niederhalter werden erst um die Enden des Teigstranges geschlossen, wenn sich dieser in der richtigen Zuordnung zur Schlingmaschine befindet.

Zur Optimierung dieser Positionierung ist eine Vermessungs- und Positionier-Vorrichtung vorgesehen, die auch eine nachträgliche, mittige Ausrichtung des in der Regel auf dem Transportband liegenden Teigstranges ermöglicht.

Auch die Länge der Teigstränge ist nicht immer gleich, da aufgrund des Rollens der Teigstränge bei gleicher Teigmenge durch nicht immer gleichen Anpreßdruck sich durchaus unterschiedliche Längen des Teigstranges ergeben können.

Zwar ist es das erwünschte Zeichen handgefertigter Brezeln, daß die Länge der überstehenden Enden bei einer fertigen Brezel nicht immer gleich ist, sondern eben von der Länge des ursprünglichen Teigstranges und der Geschicklichkeit des Brezelschlingers etc., abhängt.

Dieses Merkmal kann daher ohne weiteres auch bei maschinell geschlungenen Brezeln bestehenbleiben, jedoch können allzu lange überstehende Enden nicht akzeptiert werden, da sie u. U. während des Frostens oder Backens mit benachbarten Brezeln in Kontakt kommen würden.

Auf der anderen Seite kann der Überstand auch nicht zu knapp dimensioniert werden, da dann bei Teigsträngen mit Untermaß u. U. bei einem Aufnahmeformkörper mit unveränderbarem Umfang keine Verbindung der Enden des Teigstranges mit den Überlappungsbereichen mehr zustandekommen würde.

Um diese Gefahr auszuschließen, ist es denkbar, daß die Umfangsfläche des Aufnahmeformteiles keine unveränderbare Gestalt besitzt, sondern während des Handhabungsvorganges verändert werden kann, indem beispielsweise diese Umfangsfläche aus einem flexiblen Material besteht.

Dann kann einerseits beim Aufnehmen des Teigstranges diese Umfangsfläche eine weniger stark gebogene, im Idealfall vollständig gestreckte, gerade Kontur besitzen, und damit eine komplette Annäherung dieser Fläche an den aufzunehmenden Teigstrang und dessen Ergreifen problemlos durchgeführt werden.

Während des Hochklappens des Aufnahmeformteiles erfolgt dann das Zusammenbiegen der Umfangsfläche des Aufnahmeformteiles zur endgültigen Kontur, die ja dann der Innenkontur der späteren Brezel entspricht.

Die Größe dieser Umfangskontur im Endzustand könnte dann - nach vorangegangener Vermessung der Ausgangslänge des Teigstranges - an die Ausgangslänge dieses Teigstranges angepaßt sein, so daß im wesentlichen unabhängig von der Länge des Teigstranges immer eine optimal geformte Brezel mit optimalem Endenüberstand zustandekommt.

Ebenso könnte eine weitere Optimierung des Arbeitsablaufes dadurch erzielt werden, daß die Greifer, mit denen der Teigstrang am Aufnahmeformteil festgehalten wird, nicht in immer die gleiche geschlossene Position gefahren werden, sondern die Endposition der geschlossenen Stellung von der vorherigen Vermessung der Dicke des Teigstranges in diesem Bereich abhängt.

Für diese Optimierungen müßten also zusätzliche VermessungsEinrichtungen für die Länge des Teigstranges als auch ggfs. für die Dicke des Teigstranges an einer oder mehreren Positionen vorgesehen sein.

Einige Ausführungsformen gemäß der Erfindung sind im folgenden beispielhaft näher erläutert. Dabei zeigen die Figuren mit ungerader Numerierung jeweils eine Ansicht in Blickrichtung der ursprünglichen Erstreckung des Teigstranges, während die Figuren mit gerader Numerierung die zugehörige Ansicht in waagerechter Blickrichtung, unter 90° zur Blickrichtung der ungeraden Figuren, bezeichnet. Im einzelnen:
- Fig. 1: eine Seitenansicht beim Ergreifen des Teigstranges,
- Fig. 2: eine Frontansicht gemäß Fig. 1;
- Fig. 3: eine Seitenansicht bei hochgeschwenktem Teigstrang,
- Fig. 4: eine Frontansicht gemäß Fig. 3,
- Fig. 5: eine Seitenansicht bei bereits geschlungenem Teigstrang,
- Fig. 6: eine Frontalansicht gemäß Fig. 5,
- Fig. 7: eine Seitenansicht, bei dem der hintere Bereich der geschlungenen Brezel gerade abgelegt wird,

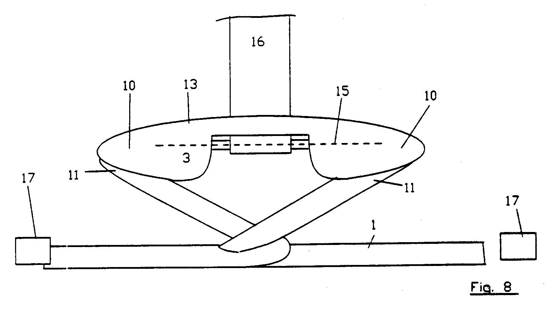

- Fig. 8: eine Frontalansicht gemäß Fig. 7,
- Fig. 9: eine Seitenansicht, bei der auch der letzte, mittlere Bereich des Teigstranges vom Aufnahmeformteil abgelegt wird,

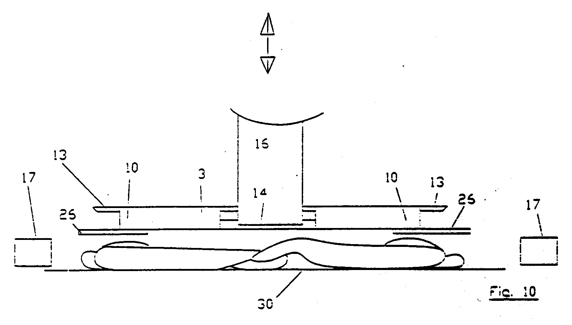

- Fig. 10: eine Frontalansicht gemäß Fig. 9,

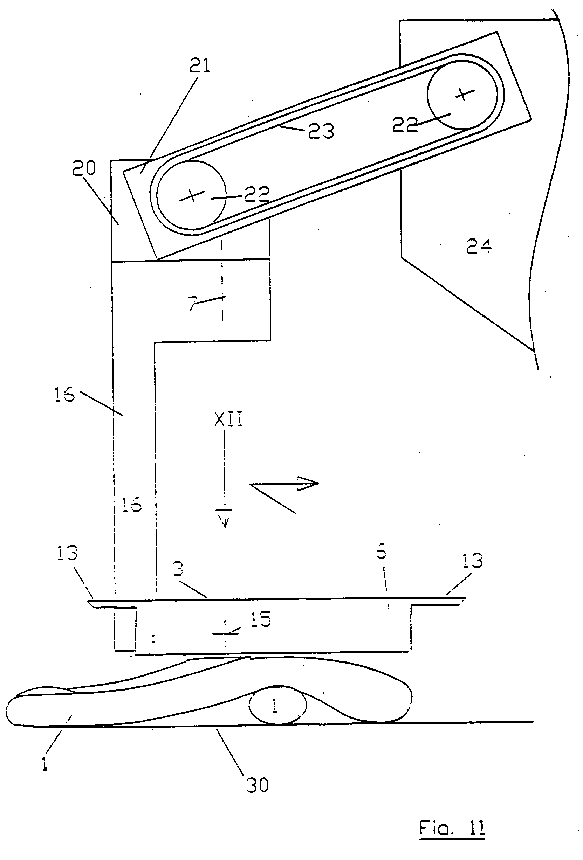

- Fig. 11: eine Seitenansicht beim Festdrücken der Teigverbindungen,
- Fig. 12: eine Aufsicht auf die fertig geschlungene, abgelegte Brezel mit darüber angeordnetem, andrückenden Aufnahmeformteil und
- Fig. 13: eine Darstellung ähnlich Fig. 1, jedoch bei Aufnahme des Teigstranges durch im wesentlichen waagerechte Annäherung.

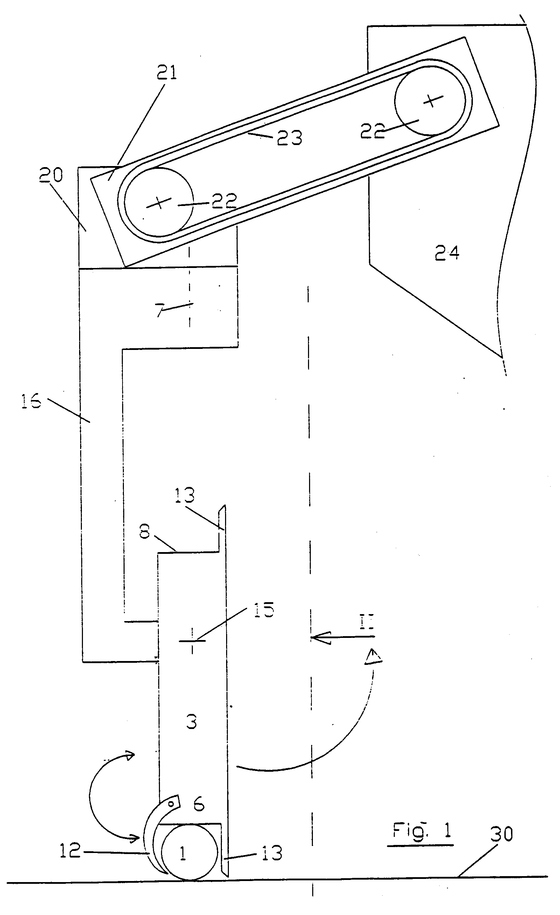

Fig. 1 zeigt in der Seitenansicht das Aufnahmeformteil 3, welches in senkrechter Lage, mit seinem Vorderbereich 6 nach unten, senkrecht auf den Teigstrang zubewegt und zum Ergreifen des Teigstranges der Greifer 12 geschlossen wurde.

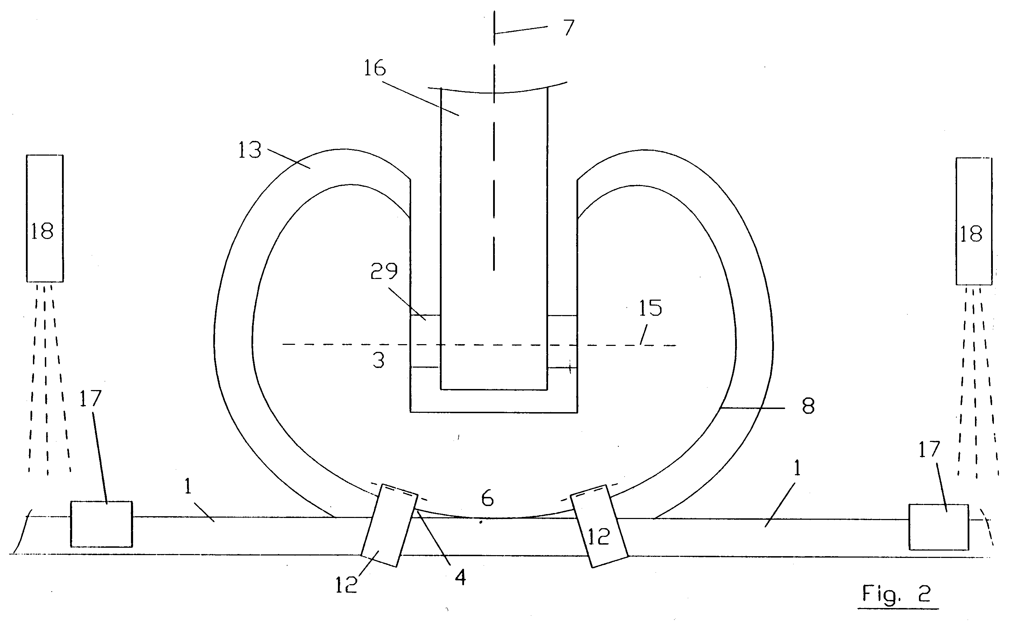

Dadurch ist das Mittelteil 4 des Teigstranges 1 zwischen einem entlang der rückwärtigen Kante des Aufnahmeformteiles herum verlaufenden Unterstützungskante 13, die sich in der Ebene des Aufnahmeformteiles erstreckt und zwei Greifer 12, die besser in der Frontalansicht der Fig. 2 zu erkennen sind, gehalten.

Der Trägerkopf 16, um dessen unteres Ende das Aufnahmeformteil 3 herum um die waagerechte Achse 15 nach hinten verschwenkt werden kann, befindet sich dabei in einer etwa senkrechten Position, und damit auch die senkrechte Drehachse 7 zwischen dem Trägerkopf 16 und der darüber angeordneten Kopfbasis 20.

Um das Aufnahmeformteil bis in Kontakt mit dem auf dem Transportband liegenden Teigstrang zu bringen, muß die gesamte Einheit abgesenkt werden, was dadurch geschieht, daß der die Kopfbasis 20 mit dem Grundgestell 24 verbindende Hebel 21 um den Lagerpunkt im Grundgestell 24 herum schräg nach unten geschwenkt ist.

Der Antrieb für die Bewegungen des Aufnahmeformteiles entlang dieses Schwenkhebels 21 erfolgt über auf den beidseitigen Schwenkachsen des Hebels angeordnete Zahnräder 22 und eine darum herumlaufende Kette 23. Selbstverständlich sind auch alle anderen Übertragungselemente denkbar.

Die Bewegungen des Aufnahmeformteiles gegenüber dem Trägerkopf 16 erfolgen vorzugsweise mittels pneumatischer Umsetzung, wofür in der senkrechten Drehachse 7 im Inneren der Drehachse eine Ringzuführung der Druckluft erfolgt, so daß der Trägerkopf 16 zusammen mit dem Aufnahmeformteil 3 nicht nach Durchführung der Schlingbewegung um 360° wieder in die Ausgangsposition leer zurückgedreht werden muß, sondern eine fortlaufende Weiterdrehung möglich ist. Dadurch werdem die Nebenzeiten reduziert und die Stückzahlleistung der Maschine erhöht.

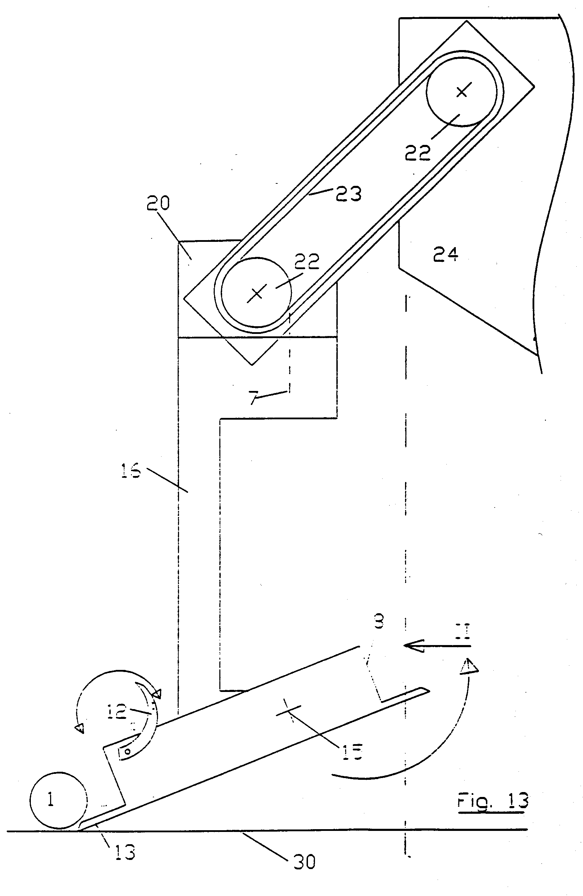

In Abwandlung der in Fig. 1 dargestellten Lösung zeigt Fig. 13 eine Lösung, bei der das Aufnahmeformteil 3 zur Aufnahme des Teigstranges 1 nicht senkrecht von oben, sondern annähernd waagerecht bei schräggestelltem Aufnahmeformteil auf den Teigstrang 1 zu bewegt wird. Dabei nähert sich der Vorderbereich 6 des Aufnahmeformteiles 3 waagerecht so dem Teigstrang 1, daß sich die dann auf der Unterseite des Aufnahmevorteiles 3 vorspringende Unterstützungskante 13 etwas unter den Teigstrang 1 hineinschiebt, der dann durch Schließen der Greiforgane 12 sicher aufgenommen wird.

Wie besser in Fig. 2 zu erkennen. besitzt das Aufnahmeformteil eine Außenumfangsfläche 8 entsprechend der Innenkontur der späteren Brezel. Umlaufend und vorstehend gegenüber dieser Umfangsfläche 8 ist die Unterstützungskante 13, die bei senkrechter Lage des Aufnahmeformteiles den Teigstrang vor einem seitlichen Herabfallen schützt, und bei waagerechter Lage die Anordnung der Unterstützungskante 13 auf der Unterseite den Teigstrang 1 trägt.

In Fig. 2 ist die etwa herzförmige Gestalt des Aufnahmeformteiles zu erkennen, in deren mittige Lücke das untere Ende des Trägerkopfes 16 hineinragt, welchem gegenüber das Aufnahmeformteil über Distanzbuchsen 29 entlang der waagerechten Schwenkachse 15 gelagert ist.

Nach dem Aufnehmen des Teigstranges wird - wie in Fig. 1 durch den bogenförmigen Pfeil angedeutet - das Aufnahmeformteil 3 um etwa 180° nach hinten hochgeschwenkt, wobei gleichzeitig der Trägerkopf 16 mittels des Schwenkhebels 21 etwas hochgezogen wird, um das ergriffene Mittelteil 4 des Teigstranges 1 vom Untergrund abzuheben.

Gleichzeitig kann die Kopfbasis 20 verschwenkt werden, so daß sich das Aufnahmeformteil 3 und damit dessen Schwenkachse 15 nach vorne, also aus der durch die durch den Teigstrang 1 verlaufende Vertikalebene weg, bewegt. Dabei wird eine Abstimmung dieser Vertikalbewegung mit der Kippbewegung um die Schwenkachse 15 angestrebt, die im Resultat bewirkt, daß der ergriffene Mittelteil 4 des Teigstranges 1 keine Querbewegung, sondern lediglich eine Hubbewegung senkrecht nach oben durchläuft. Dadurch wird ein problemloses Anlegen des Teigstranges um die Umfangsfläche 8 des Aufnahmeformteiles herum begünstigt.

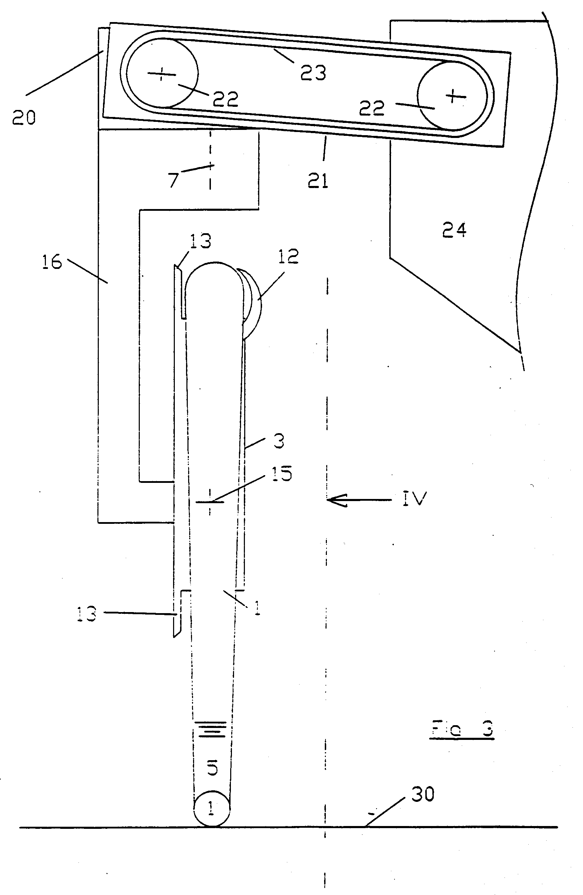

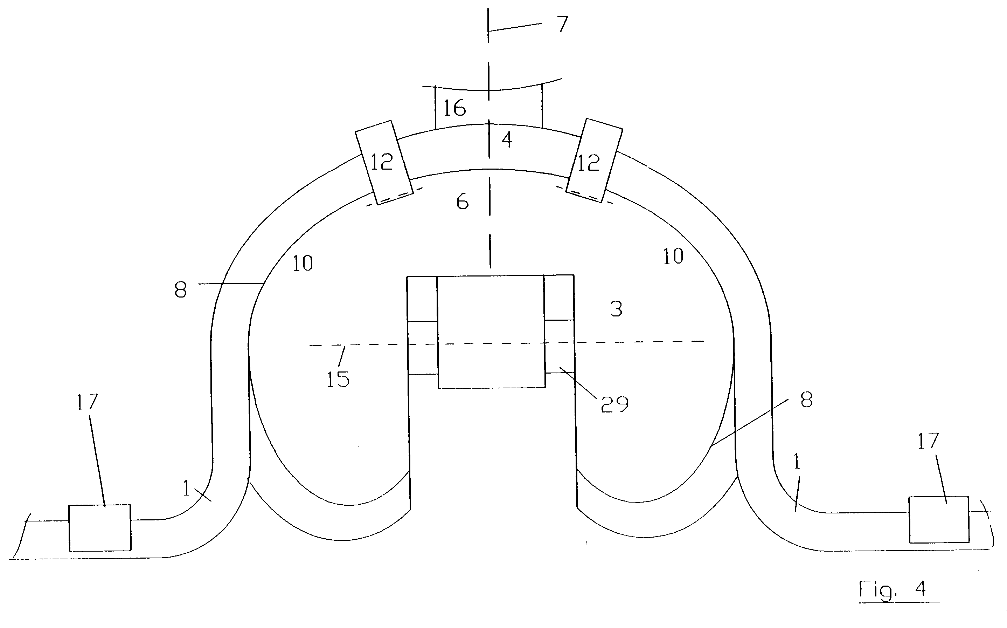

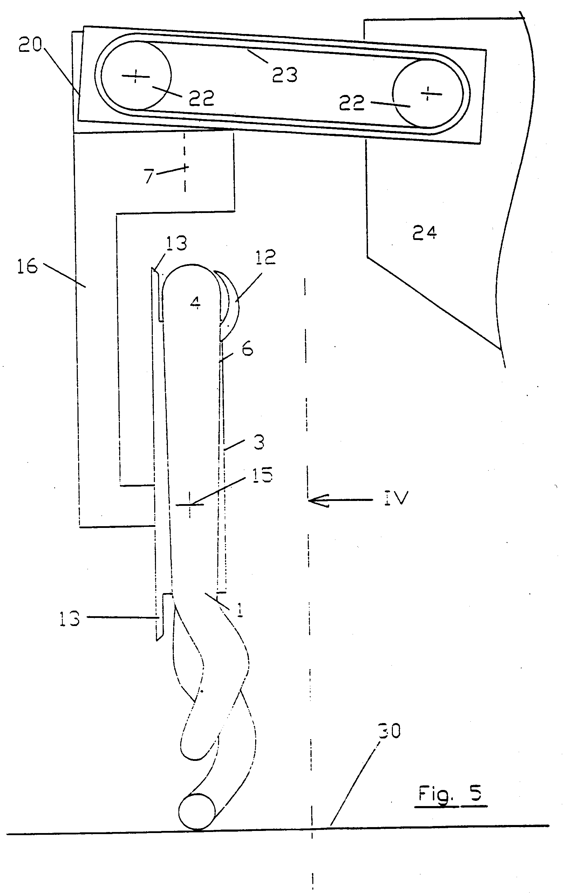

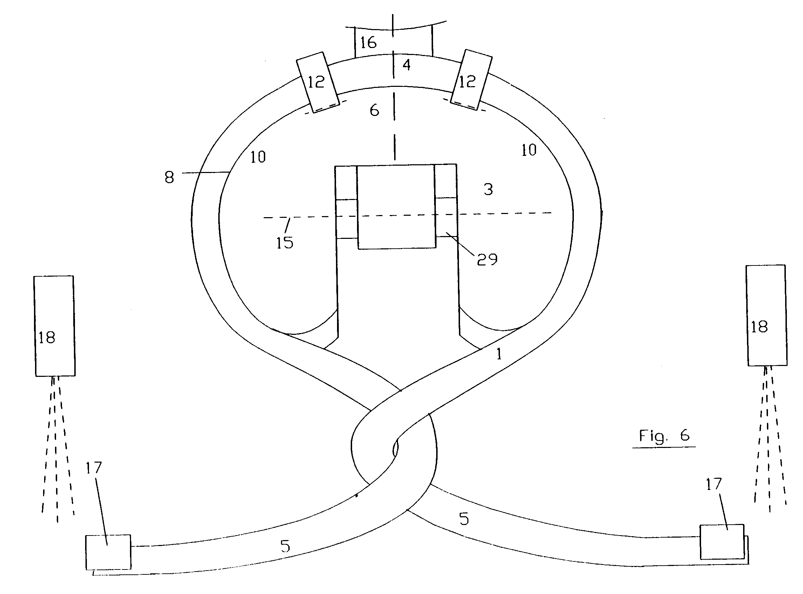

Wie in Fig. 4 dargestellt, hängen nach Hochklappen des Aufnahmeformteiles mit dem Teigstrang 1 in die senkrechte Lage die seitlichen Teile des Teigstranges 1 von den Seitenbereichen 10 des Aufnahmeformteiles frei herab und erstrecken sich mittels einer Durchbiegung nach außen durch die Niederhalter 17 hindurch. Von dieser Position aus wird das Aufnahmeformteil 3 weiter angehoben, bis es mindestens die Höhe wie in Fig. 3 dargestellt, erreicht hat und dann der Trägerkopf 16 mit Aufnahmeformteil 3 und den Teigstrang 1 um die senkrechte, oberhalb des Teigstranges 12 angeordnete, Achse 7 um 360° gedreht wird, so daß eine Verschlingung der beidseits des Aufnahmeformteiles 3 herabhängenden Teile des Teigstranges 1 erfolgt, wie in Fig.5 und 6 zu erkennen. Auch nach Durchführung der eigentlichen Schlingbewegung befinden sich die Enden des Teigstranges 1 eventuell nach unter den Niederhaltern 17, wie in Fig. 6 ebenfalls zu erkennen.

Nun erfolgt das Ablegen und Andrücken des geschlungenen Teigstranges zu einer Brezel.

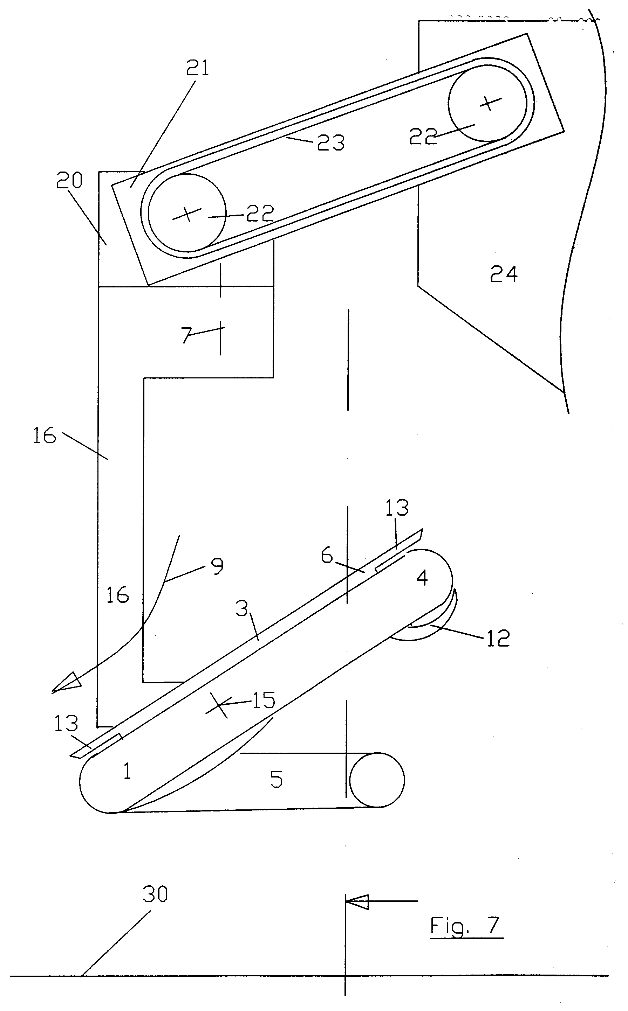

In einem ersten Schritt wird deshalb - wie in der Seitenansicht der Fig. 7 dargestellt - der Teigstrang vom hinteren Bereich des Aufnahmeformteiles abgelegt.

Dort ist zu erkennen - dargestellt durch den bogenförmigen Pfeil 9 - , daß zunächst der hintere Teil des geschlungenen Teigstranges, also der in Fig. 7 linke Bereich des Teigstranges 1, auf dem Untergrund 30 abgelegt wird, in dem das Aufnahmeformteil 3 bis annähernd in die waagerechte zurückgekippt wird und dabei gleichzeitig der Trägerkopf 16 in Bild 7 etwas nach links, also aus der Lage über den Enden 5 des Teigstranges 1 aus nach vorne bewegt wird, so daß die Enden des Teigstranges an der gewünschten Stelle unter dem Übergang zwischen dem Mittelteil 4 und dem Außenbereich 11 der Brezel zu liegen kommen.

Spätestens durch diese Querbewegung werden die Enden 5 des Teigstranges 11 aus den Niederhaltern 17 vollständig herauszogen und liegen damit frei unter dem besagten Übergangsbereich der Brezel 2.

In diesem Zustand kann der Mittelbereich 4 des Teigstranges nicht vom Aufnahmeformteil herabfallen, da er dort durch die Greifarme 12 nach wie vor gehalten wird.

Der vordere, also in Fig. 7 linke Bereich der Brezel 2 soll sich nunmehr jedoch vom Aufnahmeformteil 3 lösen. Zu diesem Zweck bewegt sich nach Erreichen des Untergrundes 30 das Formteil 3 geringfügig wieder linear nach rechts, also auf die Ausgangsposition des Teigstranges zu. Dadurch wird der Teigstrang in seinem Seitenbereich 11 geringfügig gedehnt, so daß der in Fig. 7 hintere Bereich nicht mehr an der Umfangsfläche 8 des Aufnahmeformteiles anliegt.

Anschließend wird das Aufnahmeformteil 3 mit seinem Vorderbereich 6 nach unten und mit seinem Hinterbereich nach oben gekippt, wobei jedoch am Hinterbereich des Aufnahmeformteiles 3 kein Teigstrang mehr anhaftet. Durch das Absenken des Vorderbereiches mit dem Mittelteil 4 des Teigstranges 1 gelangt dieser auf den Untergrund, in der Regel das Transportband, und verbleibt dort nach Lösen der Greiforgane 12.

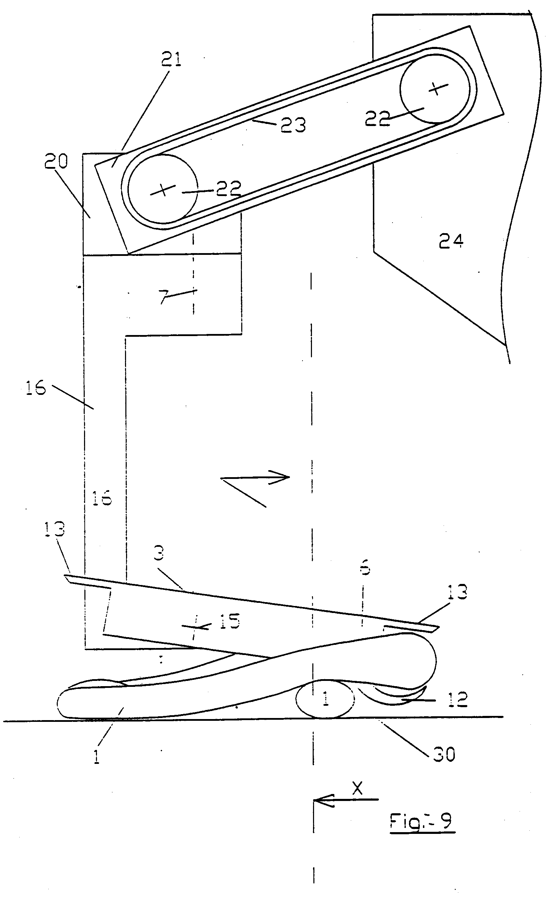

Für das anschließend gewünschte Andrücken der Teigkreuzungsstellen können zwei verschiedene Möglichkeiten gewählt werden: Entweder wird in der in Fig. 9 dargestellten Arbeitslage das Aufnahmeformteil durch Absenken der Schwenkachse 15 in eine annähernd waagerechte Position gebracht und dann durch weiteres Absenken die überlappten Enden des Teigstranges durch den darüber verlaufenden Teigstrang mittels der nun an der Oberkante des Aufnahmeformteiles 3 befindlichen Unterstützungskante 13 festgedrückt.

Dabei kann es allerdings geschehen, daß sich auch auf den innerhalb des Brezelnringes nach außen verlaufenden Endbereichen Abdrücke abzeichnen.

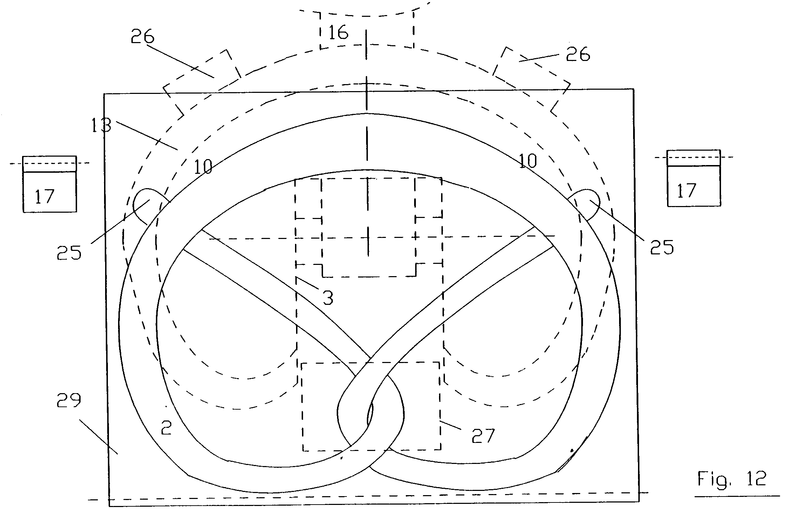

Eine andere Möglichkeit besteht darin, von der in Fig. 9 aus dargestellten Position das Aufnahmeformteil 3 schräg nach oben und vorne, also in Fig. 9 nach links, zurückzuziehen, um das Aufnahmeformteil 3 vollständig außer Kontakt mit dem Teigstrang 1 zu bringen. Anschließend wird dann das Aufnahmeformteil, nachdem es in waagerechte Position gebracht wird, wieder nach rechts, also nach vorne, soweit verbracht, bis es die Lage gemäß Fig. 12 in der Aufsicht über der geformten Brezel einnimmt, die sich darunter befindet.

Zum besseren Verständnis ist die Außenkontur des Aufnahmeformkörpers 3 lediglich unterbrochen eingezeichnet.

Durch diesen Versatz in Querrichtung zum ursprünglichen Teigstrang gelangen die Seitenbereiche 10 des Aufnahmeformteiles, die die am weitesten auseinanderliegenden Punkte bilden, etwa über die Enden des Teigstranges 1, so daß in dieser Position durch Absenken des Teigstranges die Enden festgedrückt werden können. Gleiches ist für den mittleren Knoten möglich, in dem vorher eine entsprechende Querbewegung von der Position der Fig. 12 aus mit dem Aufnahmeformteil 3 vollzogen wird oder eine in Fig. 12 ebenfalls nur unterbrochen gezeichnete, mittlere Druckfläche 27 für diesen Zweck am Aufnahmeformteil vorhanden ist, welche jedoch erst für diesen Arbeitsgang in die Ebene des Aufnahmeformteiles 3 abgeklappt werden kann, um die vorherigen Bearbeitungsschritte nicht zu behindern.

Zum besseren Andrücken der Überlappungen der Endbereiche können auch seitlich über das Aufnahmeformteil hinausragende seitliche Preßplatten 26 auf der Unterseite des Aufnahmeformteiles 3 - in dieser Position - dienen, die natürlich ausfahrbar gestaltet sein müssen. Die Funktion dieser seitlichen Preßplatten kann auch durch die an diesen Stellen vorhandenen Greiforgane 12 erfüllt werden, falls diese ausreichend flächig und mit ebener Außenkontur ausgebildet sind.

## Patentansprüche

1. Verfahren zum Verformen eines geraden Teigstranges zu einer Brezel, wobei
- der Mittelteil (4) des geraden Teigstranges **von einem Untergrund (30)** weg in Teigstrangmitte von einem Aufnahmeformteil (3) mit wenigstens teilweise an die Brezel (2) angepaßter Umfangsfläche (8) aufgenommen wird,
- beim Aufnehmen des Mittelteiles (4) der Teigstrang (1) an den Vorderbereich (6) des Aufnahmeformteiles (3) angelegt wird,
- dann der Vorderbereich (6) des Aufnahmeformteiles (3) nach oben gekippt wird,
- das Hochkippen des Vorderbereiches (6) des Aufnahmeformteiles (3) nach dem Aufnehmen des Teigstranges (1) bis in eine solche senkrechte Lage des Aufnahmeformteiles (3) durchgeführt wird, daß der Mittelbereich (4) des Teigstranges (1) den höchsten Punkt bezüglich des Aufnahmeformteiles (3) einnimmt,
- dann das Aufnahmeformteil (3) mit dem Mittelteil (4) des Teigstranges (1) relativ zu den Enden (5) des Teigstranges (1) um 360° gedreht wird, so daß die beiden Seiten des Stranges miteinander verschlungen werden,
- sodann der Teigstrang (1) von dem Aufnahmeformteil (3) abgekippt wird, indem vor dem Abkippen des Aufnahmeformteiles (3) in die Waagerechte zum Ablegen des Mittelteiles (4) des geschlungenen Teigstranges (1) **auf dem Untergrund (30)** das Aufnahmeformteil (3) eine Verfahrbewegung (Pfeil 9) quer zur Ursprungsrichtung des Teigstranges (1) durchläuft, und
- zum Andrücken der Enden (5) des Teigstranges das sich nach unten bewegende Aufnahmeformteil (3) mit seinen Seitenbereichen (10) die Außenbereiche (11) der Brezel auf den darunter liegenden Enden (25) des Teigstranges (1) festdrückt.

2. Verfahren nach Anspruch 1,
**dadurch gekennzeichnet, daß**
beim Aufnehmen des Mittelteiles (4) des Teigstranges (1) das Aufnahmeformteil (3) etwa senkrecht, mit seinem Vorderbereich (6) nach unten weisend, von oben gegen den Teigstrang (1) angenähert wird und der Teigstrang (1) mittels einseitig oder beidseitig an seinem Vorderbereich (6) angebrachten Greiforganen (12) an der Umfangsfläche (8) des Aufnahmeformteiles (3) gehalten wird.

3. Verfahren nach Anspruch 1 oder 2,
**dadurch gekennzeichnet, daß**
das Aufnahmeformteil (3) auf einer seiner Seiten eine umlaufende, über die Umfangsfläche (8) hinausragende, Unterstützungskante (13) aufweist.

4. Verfahren nach Anspruch 1 oder 3,
**dadurch gekennzeichnet, daß**
beim Aufnehmen des Mittelteile (4) des Teigstranges (1) das Aufnahmeformteil (3) etwa waagerecht, mit seinem Vorderbereich (6) nach hinten weisend, von vorne gegen den Teigstrang (1) angenähert wird und der Teigstrang (1) mittels einseitig oder beidseitig an seinem Vorderbereich (6) angebrachten Greiforganen (12) an der Umfangsfläche (8) des Aufnahmeformteiles (3) gehalten wird.

5. Verfahren nach einem der vorhergehenden Ansprüche,
**dadurch gekennzeichnet, daß**
die Umfangsfläche (8) des Aufnahmeformteiles (3) bei Aufnahme des Mittelteiles (4) des Teigstranges (1) noch gestreckt ist und sich erst vor der Schlingbewegung um die senkrechte Achse zu einer gebogenen Außenkontur verformt.

6. Verfahren nach einem der vorhergehenden Ansprüche,
**dadurch gekennzeichnet, daß**
beim Aufnehmen des Mittelteiles (4) des Teigstranges (1) durch das Aufnahmeformteil (3) sich das Aufnahmeformteil (3) zusätzlich zu seiner Kippbewegung um die waagerechte Achse (15) eine Querbewegung durchläuft, so daß der Mittelteil (4) des Teigstranges (1) im wesentlichen immer in der gleichen Vertikalebene verbleibt.

7. Verfahren nach einem der vorhergehenden Ansprüche,
**dadurch gekennzeichnet, daß**
das Aufnahmeformteil (3) über seine Seitenbereiche (10) vorstehende, ausfahrbare seitliche Preßplatten (26) zum Andrücken der Enden unter der geschlungenen Brezel aufweist.

8. Verfahren nach einem der vorhergehenden Ansprüche,
**dadurch gekennzeichnet, daß**
etwa im Zentrum des Aufnahmeformteiles (3) eine mittlere Druckfläche (27) für das abschließende Andrücken des mittleren Knotens der Brezel (2) angeordnet ist.

9. Verfahren nach einem der vorhergehenden Ansprüche,
**dadurch gekennzeichnet, daß**
die Teigstränge (1) entlang ihrer Längserstreckung taktweise in den Arbeitsbereich der Schlingmaschine bewegt werden und während des Anhaltens zu einer Brezel (2) geschlungen werden, so daß der Weitertransport auf dem gleichen Transportband (28) geschieht.

10. Verfahren nach einem der vorhergehenden Ansprüche,
**dadurch gekennzeichnet, daß**
nach dem Schlingen der Brezel (2) diese umgedreht und auf ihrer bisherigen Oberseite abgelegt wird.

11. Vorrichtung zum Verformen eines geraden Teigstranges zu einer Brezel, insbesondere zur Durchführung des Verfahrens nach einem der vorhergehenden Ansprüche,
**dadurch gekennzeichnet, daß**
- das Aufnahmeformteil (3) um eine oberhalb und waagerecht, parallel zur Erstreckung der Teigstränge (1) liegende, Schwenkachse (15) um 180° von einer senkrechten Lage wiederum in eine senkrechte Lage schwenkbar ist,
- der Trägerkopf (16) mit dem Aufnahmeformteil (3) senkrecht bewegbar ist, so daß das Aufnahmeformteil (3) das Niveau des Teigstranges (1) erreichen kann und
- das Aufnahmeformteil (3) quer zur Teigstrang-Richtung verfahrbar ist.

12. Vorrichtung zum Verformen eines geraden Teigstranges zu einer Brezel, insbesondere zur Durchführung des Verfahrens nach einem der vorhergehenden Ansprüche,
**dadurch gekennzeichnet, daß**
- das Aufnahmeformteil (3) um eine oberhalb und waagerecht, parallel zur Erstreckung der Teigstränge (1) liegende, Schwenkachse (15) um 270° von einer waagerechten Lage wiederum in eine senkrechte Lage schwenkbar ist,
- der Trägerkopf (16) mit dem Aufnahmeformteil (3) senkrecht bewegbar ist, so daß das Aufnahmeformteil (3) das Niveau des Teigstranges (1) erreichen kann und
- das Aufnahmeformteil (3) quer zur Teigstrang-Richtung verfahrbar ist.

13. Vorrichtung nach Anspruch 11 oder 12,
**dadurch gekennzeichnet, daß**
das Aufnahmeformteil (3) sowie der ihn tragende Trägerkopf (16) an einem Grundgestell (24) oberhalb der Ebene der Teigstränge (1) befestigt sind.

14. Vorrichtung nach einem der Ansprüche 11, 12 oder 13,
**dadurch gekennzeichnet, daß**
im Bereich der Schlingmaschine bewegliche Niederhalter (17) in der Nähe der Enden des Teigstranges (1) so angeordnet sind, daß sich beim Schlingen des Teigstranges (1) die Enden des Teigstranges noch unter den Niederhaltern (17) befinden.

15. Vorrichtung nach einem der Ansprüche 11 bis 14,
**dadurch gekennzeichnet, daß**
im Bereich der Schlingmaschine wenigstens eine Vermessungs- und Positioniervorrichtung (18) zum Bestimmen und Ausgleichen der mittigen Lage des Teigstranges (1) bezüglich der Schlingmaschine angeordnet ist.

16. Vorrichtung nach einem der Ansprüche 11 bis 15,
**dadurch gekennzeichnet, daß**
wenigstens eine Vermessungs- und Positioniervorrichtung (18) zum Bestimmen der Länge des Teigstranges (1) angeordnet ist.

17. Vorrichtung nach einem der Ansprüche 11 bis 16,
**dadurch gekennzeichnet, daß**
das Aufnahmeformteil (3) aus flexiblem Material mit veränderlichen Endumfang besteht und der Endumfang in Abhängigkeit von der Länge des Teigstranges (1) während des Schlingens geregelt wird.

18. Vorrichtung nach einem der Ansprüche 11 bis 17,
**dadurch gekennzeichnet, daß**
die geschlossene Stellung der Greiforgane (12) des Aufnahmeformteiles (3) in Abhängigkeit von einer vorher gemessenen Dicke des Teigstranges (1) an den zu ergreifenden Stellen festgelegt wird.

19. Vorrichtung nach einem der Ansprüche 11 bis 18,
**dadurch gekennzeichnet, daß**
die Schlingmaschine eine Wendevorrichtung (19) zum Umlegen der geschlungenen Brezel auf die bisherige Oberseite aufweist.

## Claims

1. Method for shaping a straight strand of dough into a pretzel, wherein
- the middle portion (4) of the straight strand of dough is picked up **from a single base surface (30)** by the middle of the strand of dough by means of a pick-up former (3), the circumferential surface (8) of which at least partially matches that of the pretzel (2),
- as the middle portion (4) of the strand of dough (1) is picked up it is laid against the front portion (6) of the pick-up former (3),
- the front portion (6) of the pick-up former (3) is then pivoted upwards,
- having picked up the strand of dough (1), the front portion (6) of the pick-up former (3) is pivoted upwards until the pick-up former (3) has reached a vertical position such that the middle portion (4) of the strand of dough (1) is at the highest point of the pick-up former (3),
- the pick-up former (3) with the middle portion (4) of the strand of dough (1) is then rotated by 360° relative to the ends (5) of the strand of dough (1) so that the two sides of the strand become intertwined,
- the strand of dough (1) is then pivoted off the pick-up former (3) such that before it is tipped off the pick-up former (3) into the horizontal so that the middle portion (4) of the intertwined strand of dough (1) is set down **on the base surface (30),** the pick-up former (3) travels (arrow 9) transversely to the original direction of the strand of dough (1), and
- in order to press on the ends (5) of the strand of dough, as it moves downwards, the pick-up former (3) presses with its side portions (10) against the outer edges (11) of the pretzel onto the ends (25) of the strand of dough (1) lying thereunder.

2. Method as claimed in claim 1,
**characterised in that**
as it picks up the middle portion (4) of the strand of dough (1), the pick-up former (3) moves substantially vertically towards the strand of dough (1) with its front portion (6) pointing downwards and the strand of dough (1) is held against the circumferential surface (8) of the pick-up former (3) by means of gripping members (12) arranged on one or both sides of the front portion (6) thereof.

3. Method as claimed in claim 1 or 2,
**characterised in that**
the pick-up former (3) has a support edge (13) extending around one of its sides (13) and protruding above the circumferential surface (8).

4. Method as claimed in claim 1 or 3,
**characterised in that**
as it picks up the middle portion (4) of the strand of dough (1), the pick-up former (3) is moved substantially horizontally from the front towards the strand of dough (1) and the strand of dough (1) is held against the circumferential surface (8) of the pick-up former (3) by means of gripping members (12) arranged on one side or on both sides of the front edge (6) thereof.

5. Method as claimed in one of the preceding claims,
**characterised in that**
as it picks up the middle portion (4) of the strand of dough (1), the circumferential surface (8) of the pick-up former (3) is stretched and deformed to provide a curved outer contour before the intertwining movement about the vertical axis.

6. Method as claimed in one of the preceding claims,
**characterised in that**
as the middle portion (4) of the stand of dough (1) is picked up by the pick-up former (3), the pick-up former (3) is moved in a transverse movement in addition to the pivoting movement about the horizontal axis (15) so that the middle portion (4) of the strand of dough (1) always remains in essentially the same vertical plane.

7. Method as claimed in one of the preceding claims,
**characterised in that**
the pick-up former (3) has, protruding out from its side areas (10), extendable lateral pressing plates (26) for pressing the ends underneath the intertwined pretzel.

8. Method as claimed in one of the preceding claims,
**characterised in that**
a central pressing surface (27) is arranged approximately in the centre of the pick-up former (3) to close the pretzel (2) by pressing on the central knot thereof.

9. Method as claimed in one of the preceding claims,
**characterised in that**
the strands of dough (1) are timed so that they move lengthwise along the working area of the intertwining machine and are intertwined to form a pretzel (2) during stoppage so that they can continue to be conveyed on the same conveyor belt (28).

10. Method as claimed in one of the preceding claims,
**characterised in that**
once the pretzel (2) has been formed into shape, it is turned over and laid on what was previously its upper side.

11. Device for shaping a straight strand of dough into a pretzel, in particular for implementing the method as claimed in one of the preceding claims,
**characterised in that**
- the pick-up former (3) can be pivoted by 180° about a horizontally positioned pivot axis (15) above and parallel with the extended strand of dough (1) from a vertical position and back into its vertical position,
- the bearing head (16) with the pick-up former (3) can be moved vertically so that the pick-up former (3) is able to reach the level of the strand of dough (1) and
- the pick-up former (3) can be moved transversely to the direction of the strand of dough.

12. Device for shaping a straight strand of dough into a pretzel, in particular for implementing the method as claimed in one of the preceding claims,
**characterised in that**
- the pick-up former (3) can be pivoted by 270° about a horizontally positioned pivot axis (15) parallel with the extended strand of dough (1) from a horizontal position and back into a horizontal position,
- the bearing head (16) with the pick-up former (3) can be moved vertically so that the pick-up former (3) is able to reach the level of the strand of dough (1) and
- the pick-up former (3) can be moved transversely to the direction of the strand of dough.

13. Device as claimed in claim 11 or 12,
**characterised in that**
the pick-up former (3) and the bearing head (16) on which it is supported are secured to a base frame (24) above the plane of the strands of dough (1).

14. Device as claimed in claim 11, 12 or 13,
**characterised in that**
moveable retaining-down members (17) are arranged in the area of the intertwining machine in the vicinity of the ends of the strand of dough (1) such that when the strand of dough (1) is being intertwined the ends of the dough strand still remain underneath the retaining members (17).

15. Device as claimed in one of claims 11 to 14, characterised in that at least one measuring and positioning device (18) is arranged in the area of the intertwining machine for determining and adjusting the central position of the strand of dough (1) relative to the intertwining machine.

16. Device as claimed in one of claims 11 to 15,
**characterised in that**
at least one measuring and positioning device (18) is provided in order to determine the length of the strand of dough (1).

17. Device as claimed in one of claims 11 to 16,
**characterised in that**
the pick-up former (4) is made from a flexible material with a variable end circumference and the end circumference is adjusted during the intertwining process depending on the length of the strand of dough (1).

18. Device as claimed in one of claims 11 to 17,
**characterised in that**
the closed position of the gripping members (12) of the pick-up former (3) depends on a thickness of the strand of dough (1), measured beforehand, at the points to be gripped.

19. Device as claimed in one of claims 11 to 18,
**characterised in that**
the intertwining machine has a turning device (19) for turning the intertwined pretzel over onto what was previously the upper side.

## Revendications

1. Procédé pour former un Brezel à partir d'un boudin de pâte rectiligne, dans lequel
- la partie médiane (4) du boudin de pâte rectiligne est saisie sur un support (30), au niveau du milieu dut boudin de pâte, à l'aide d'un élément de moule (3) dont la surface périphérique (8) est au moins partiellement adaptée au Brezel (2)
- lors de la saisie de la partie médiane (4), le boudin de pâte (1) est appliqué contre la région antérieure (6) de l'élément de moule (3) ,
- la région antérieure (6) de l'élément de moule (3) pivote ensuite vers le haut,
- le mouvement de pivotement vers le haut de la région antérieure (6) de l'élément de moule (3) se poursuit après la saisie du boudin de pâte (1) jusque dans une position verticale de l'élément de moule (3) telle, que la partie médiane (4) du boudin de pâte (1) occupe le point le plus élevé par rapport à l'élément de moule (3),
- l'élément de moule (3) avec la partie médiane (4) du boudin de pâte (1) tourne de 360° par rapport aux extrémités (5) dudit boudin de pâte (1), de telle sorte que les deux côtés du boudin s'entrelacent l'un avec l'autre,
- le boudin de pâte (1) est ensuite déchargé de l'élément de moule (3), l'élément de moule (3) effectuant un déplacement (flèche 9) transversalement à la direction d'origine du boudin de pâte (1) avant que l'élément de moule (3) soit amené dans la position horizontale aux fins de déposer sur le support (30) la partie médiane (4) du boudin de pâte (1) entrelacé et
- pour appliquer les extrémités (5) du boudin de pâte, l'élément de moule (3) qui se déplace vers le bas presse fermement par ses zones latérales (10) les parties extérieures (11) du Brezel sur les extrémités (25) du boudin de pâte (1) situées en-dessous.

2. Procédé selon la revendication 1, caractérisé par le fait que, lors de la saisie de la partie médiane (4) du boudin de pâte (1), l'élément de moule (3) s'approche du boudin de pâte (1) sensiblement verticalement, par le dessus, sa partie antérieure étant dirigée vers le bas et que le boudin de pâte (1) est tenu contre la surface périphérique (8) de l'élément de moule (3) au moyen d'organes de préhension (12) qui sont montés dans la région antérieure et agissent d'un côté ou de deux côtés.

3. Procédé selon la revendication 1 ou 2, caractérisé par le fait que l'élément de moule (3) comporte, sur un côté, un rebord (13) d'appui continu qui fait saillie sur la surface périphérique (8).

4. Procédé selon la revendication 1 ou 3, caractérisé par le fait que lors de la saisie de la partie médiane (4) du boudin de pâte (1) l'élément de moule (3) s'approche sensiblement horizontalement, sa partie antérieure (6) étant tournée vers l'arrière, par le devant du boudin de pâte (1) et que le boudin de pâte (1) est tenu contre la surface périphérique (8) de l'élément de moule (3) au moyen d'organes de préhension (12) qui sont montés dans sa région antérieure et agissent d'un côté ou des deux côtés.

5. Procédé selon l'une des revendications précédentes, caractérisé par le fait que la surface périphérique (8) de l'élément de moule (3), lors de la saisie de la partie médiane (4) du boudin de pâte (1) est rectiligne et prend une forme extérieure courbe juste avant le mouvement d'entrelacement autour de l'axe vertical.

6. Procédé selon l'une des revendications précédentes, caractérisé par le fait que lors de la saisie de la partie médiane (4) du boudin de pâte (1) par l'élément de moule (3) , l'élément de moule (3) effectue, en plus de son mouvement de pivotement autour de l'axe horizontal (15), un déplacement transversal de telle sorte que la partie médiane (4) du boudin de pâte (1) reste toujours sensiblement dans le même plan vertical.

7. Procédé selon l'une des revendications précédentes, caractérisé par le fait que l'élément de moule (3) présente des plaques (26) de pression latérales, déployables qui font saillie au-delà de ses zones latérales, aux fins de presser les extrémités sous le Brezel croisé.

8. Procédé selon l'une des revendications précédentes, caractérisé par le fait qu'une surface de pression (27) médiane est disposée sensiblement au centre de l'élément de moule (3) pour presser le noeud médian du Brezel (2).

9. Procédé selon l'une des revendications précédentes, caractérisé par le fait que les boudins de pâte (1) sont amenés de manière discontinue dans le sens de la longueur, dans la zone de travail de la machine à entrelacer et sont noués en Brezel (2) au cours de la phase d'arrêt de telle sorte que le transport se poursuit sur la même bande transporteuse (28).

10. Procédé selon l'une des revendications précédentes, caractérisé par le fait qu'après entrelacement le Brezel (2) est tourné et est déposé sur sa face qui jusque là était sa face supérieure.

11. Dispositif pour former un Brezel à partir d'un boudin de pâte rectiligne, notamment pour la mise en oeuvre du procédé selon l'une des revendications précédentes, caractérisé par le fait que
- l'élément de moule (3) peut être amené d'une position verticale dans une nouvelle position verticale, par pivotement de 180°, autour d'un axe de pivotement (15) horizontal disposé au-dessus du boudin de pâte (1), parallèlement à l'axe longitudinal de celui-ci,
- que la tête-support (16) avec l'élément de moule (3) peut être déplacée verticalement de telle sorte que l'élément de moule (3) puisse atteindre le niveau du boudin de pâte (1) et
- l'élément de moule (3) peut être déplacé transversalement à la direction du boudin de pâte.

12. Dispositif pour former un Brezel à partir d'un boudin de pâte rectiligne, notamment pour la mise en oeuvre du procédé selon l'une des revendications précédentes, caractérisé par le fait que
- l'élément de moule (3) peut être amené d'une position horizontale dans une position verticale, par pivotement de 270° autour d'un axe de pivotement (15) horizontal disposé au-dessus du boudin de pâte (1), parallèlement à l'axe longitudinal de celui-ci,
- que la tête-support (16) avec l'élément de moule (3) peut être déplacée verticalement de telle sorte que l'élément de moule (3) puisse atteindre le niveau du boudin de pâte (1) et
- l'élément de moule (3) peut être déplacé transversalement à la direction du boudin de pâte.

13. Dispositif selon la revendication 11 ou 12, caractérisé par le fait que l'élément de moule (3) et la tête-support (16) qui porte celui-ci sont fixés à un bâti (24), au-dessus du plan des boudins de pâte (1).

14. Dispositif selon l'une des revendications 11, 12 ou 13, caractérisé par le fait que dans la région de la machine à entrelacer des pinces (17) mobiles sont disposées au voisinage des extrémités du boudin de pâte (1) de telle sorte que lors de l'entrelacement du boudin de pâte (1), les extrémités dudit boudin de pâte se trouvent toujours sous les pinces (17).

15. Dispositif selon l'une des revendications 11 à 14, caractérisé par le fait qu'au moins un dispositif (18) de mesure et de positionnement pour déterminer et équilibrer la position médiane du boudin de pâte (1) par rapport à la machine à entrelacer est placé dans la région de la machine à entrelacer.

16. Dispositif selon l'une des revendications 11 à 15, caractérisé par le fait qu'il est prévu au moins un dispositif (18) de mesure et de positionnement pour déterminer la longueur des boudins de pâte (1).

17. Dispositif selon l'une des revendications 11 à 16, caractérisé par le fait que l'élément de moule (3) est en un matériau souple dont la circonférence au niveau des extrémités peut être modifiée et que la circonférence au niveau des extrémités est réglée pendant l'opération d'entrelacement, en fonction de la longueur du boudin de pâte (1).

18. Dispositif selon l'une des revendications 11 à 17, caractérisé par le fait que la position de fermeture des organes de préhension (12) de l'élément de moule (3) est déterminée en fonction d'une épaisseur préalablement mesurée du boudin de pâte (1) au niveau des points de préhension.

19. Dispositif selon l'une des revendications 11 à 18, caractérisé par le fait que la machine à entrelacer comporte un dispositif (19) de retournement pour poser le Brezel entrelacé sur sa face qui jusqu'à présent était sa face supérieure.
